# EUROPÄISCHE PATENTANMELDUNG

(11) **EP 4 144 707 A1**
(43) Veröffentlichungstag der Anmeldung: **08.03.2023**
(21) Anmeldenummer: 21195380.7
(22) Anmeldetag: 07.09.2021
(51) Int. Cl.: C04B 26/02, C04B 26/00

(54) **MISCHUNG ZUR HERSTELLUNG EINES FORMKÖRPERS MIT VERBESSERTEM BINDEMITTEL**

(71) Anmelder: Biolac GmbH & Co. KG, 31195 Lamspringe (DE)
(72) Erfinder: WIELAND, Frank, Kittlitz (DE); KIRCHHOF, Tim, Thiede (DE)
(74) Vertreter: Michalski Hüttermann & Partner Patentanwälte mbB

(57) **Zusammenfassung**

Die vorliegende Erfindung betrifft eine Mischung und ein Verfahren zum Herstellen eines Formkörpers mit einem verbesserten Bindersystem basierend auf Lactosemonohydrat.

## Beschreibung

Die vorliegende Erfindung bezieht sich auf das Gebiet der Holz- und/oder Verbundwerkstoffe, insbesondere der Spanplatten und Faserplatten, sowie Verbundwerkstoffe, welche ein strukturgebendes und/oder dimensionsstabilisierendes Material in einem Binder aufweisen.

Aktuell werden zur Herstellung von Holzwerkstoffen weltweit mit einem Anteil von ca. 90 % überwiegend Erdöl-basierte Polykondensations-Harze eingesetzt, wobei in dieser Gruppe wiederum die sog. Harnstoff-Formaldehyd-Harze bzw. mit der englischsprachigen Bezeichnung die sog. "UF"-Harze (Urea Formaldehyde) bei weitem überwiegen.

Bei allen technologischen und auch wirtschaftlichen Vorteilen dieser Harze bleibt jedoch ein entscheidender Nachteil bestehen, dass diese Harze nämlich grundsätzlich hydrolyseanfällig sind und daher auch die damit hergestellten Holzwerkstoffe während der Herstellung und selbst Jahre danach immer noch Formaldehyd emittieren. Diese Formaldehydemissionen klingen zwar nach und nach auf immer niedrigere Restemissionswerte ab erreichen jedoch wegen ihrer Hydrolyseempfindlichkeit niemals den Grad der Formaldehydfreiheit. Darüber hinaus werden Kunstharze aus fossilen Rohstoffen hergestellt, welche langfristig nicht mehr oder kaum zur Verfügung stehen werden und zunehmend starken Preisschwankungen unterworfen sind. Zudem werden aus heutiger Sicht ökologisch gesehen langfristige Probleme hervorgerufen. WO 2017/118449 A1 beschreibt ein Bindemittel zur Herstellung feuerfester Massen, das unter anderem eine verbesserte Umweltfreundlichkeit bereitstellt. Hierzu schlägt dieses Dokument vor, dass das Bindemittel aus einer Kombination von Tannin, Lactose, feinkörnigem Siliziumdioxid und Aluminiumpulver besteht. Hinsichtlich der Lactose wird auch LactoseMonohydrat genannt. Das Basismaterial der feuerfesten Massen umfasst insbesondere anorganische Körnungen, wobei beispielsweise Kohlenstofffasern zugesetzt sein können.

WO 2008/089847 A1 beschreibt Holzverbundplatten, beispielsweise Spanplatten, orientierte Spanplatten und Holzfaserplatten, und insbesondere Verbundholzplatten, die ein Harz aus einer biologischen Quelle enthalten und/oder ein formaldehydarmes oder formaldehydfreies Bindemittel aufweisen. Ein derartiges Bindemittel soll in einer Ausgestaltung mindestens ein Reaktionsprodukt aus einem Kohlenhydrat-Reaktanten und einem Amin-Reaktanten enthalten, wobei der Kohlenhydrat-Reaktand beispielsweise Lactose sein kann.

WO 2009/048598 A1 beschreibt eine Klebstoffzusammensetzung zum Verkleben von lignocellulosehaltigen Substraten. In einer Ausführungsform der Erfindung umfasst die Klebstoffzusammensetzung einen Vernetzer und ein nicht-harnstoffhaltiges Verdünnungsmittel, wobei das nicht-harnstoffhaltige Verdünnungsmittel Lactose umfassen kann.

WO 2011/044490 A1 beschreibt eine wässrige Bindemittelzusammensetzung, die ein Kohlenhydrat und ein Vernetzungsmittel zum Vernetzen des Kohlenhydrats enthält, um Emissionen von Formaldehyd zu verringern. Anwendung können insbesondere Faserplatten sein oder auch Sperrholz. Das Kohlenhydrat kann beispielsweise Lactose umfassen.

WO 2016/109164 A2 beschreibt Verbundprodukte, die eine Vielzahl von Lignocellulose-Substraten und ein zumindest teilweise gehärtetes, pulverförmiges Bindemittel enthalten. Das pulverförmige gehärtete Bindemittel kann Lactose enthalten. Ferner kann eine pulverförmige stickstoffhaltige Verbindung enthalten sein.

WO 2019/000103 A1 offenbart Klebstoffzusammensetzungen, um Partikel, z. B. einer Matte aus Holzspänen, die bei der Herstellung von Spanplatten hergestellt werden, vor dem Aushärten Kohäsionsfestigkeit zu verleihen. Die Klebstoffzusammensetzungen umfassen a) ein oder mehrere Biopolymere und b) ein oder mehrere Monomere oder Oligomere. Das Oligomer kann beispielsweise Lactose umfassen, wobei das Biopolymer etwa Stärke aufweisen kann.

WO 2019/158917 A1 betrifft ein Verbundmaterial, umfassend ein Holzmaterial, das Cellulosefasern und eine Harzbindemittelzusammensetzung umfasst, die (i) Zucker und (ii) ein Metallsalz, das ein Halogenid-, Acetat- oder Sulfatsalz eines Metallelements der Gruppe I oder II ist, umfasst. Der Zucker kann Lactose sein.

In US 4,654,259 werden Holzoberflächen durch Erhitzen und Pressen mit einer Bindemittelzusammensetzung miteinander verbunden, die, bezogen auf den Feststoffgehalt des Bindemittels, 10 bis 70 % eines oder mehrerer Zucker und 90 bis 30 % eines Aldehyds enthält, wobei der Zucker Lactose sein kann.

WO 2012/037451 A2 beschreibt ein Bindemittel, das die Produkte eines Kohlenhydrat-Reaktanten, wie etwa Lactose, einer Amin-Base und einer organischen Säure umfasst. Das Bindemittel ist nützlich zur Verfestigung etwa von Fasern. Beispiele umfassen etwa Holzfaserplatten.

DD 252 829 A5 beschreibt die Verwendung von Lactose als Binder in Tabletten.

Derartige aus dem Stand der Technik bekannte Lösungen können jedoch noch Verbesserungspotential aufweisen.

Es besteht somit die Notwendigkeit, alternative Bindemittel bereitzustellen, insbesondere Bindemittel, die formaldehydfrei bzw. emissionsarm sind oder bei denen die entstehenden Holz- und/oder Verbundwerkstoffe nach der Herstellung nur geringste Mengen Formaldehyd emittieren.

Die Lösung der Aufgabe erfolgt erfindungsgemäß durch eine Mischung mit den Merkmalen des Anspruchs 1. Die Lösung der Aufgabe erfolgt erfindungsgemäß ferner durch eine Verwendung mit den Merkmalen des Anspruchs 10, durch ein Verfahren mit den Merkmalen des Anspruchs 11 und durch einen Formkörper mit den Merkmalen des Anspruchs 15. Bevorzugte Ausgestaltungen der Erfindung sind in den Unteransprüchen, in der Beschreibung und in den Figuren offenbart, wobei weitere in den Unteransprüchen oder in der Beschreibung oder den Figuren beschriebene oder gezeigte Merkmale einzeln oder in einer beliebigen Kombination einen Gegenstand der Erfindung darstellen können, wenn sich aus dem Kontext nicht eindeutig das Gegenteil ergibt.

Die vorliegende Erfindung betrifft eine Mischung zur Ausbildung von Formkörpern, aufweisend ein organisches strukturgebendes und/oder dimensionsstabilisierendes Material und ein Bindemittel zum Aufnehmen des strukturgebenden und/oder dimensionsstabilisierenden Materials,
wobei das Bindemittel im Wesentlichen frei von Aldehyd, insbesondere Formaldehyd, ist und eine wasserhaltige Zusammensetzung wenigstens aufweisend Lactosemonohydrat umfasst.

Überraschenderweise hat sich herausgestellt, aus einer derartigen Mischung Formkörper, wie etwa Holz- und Verbundwerkstoffe, hergestellt werden können, die zum einen eine äußert geringe Formaldehydemission aufweisen sind und zum anderen bei vielen Anwendungen die auf dem Gebiet der Technik vorherrschenden Anforderungen an einen Binder erfüllen. Somit ergeben sich deutliche Vorteile gegenüber den Lösungen aus dem Stand der Technik.

Die beschriebene Mischung dient somit dem Ausbilden von Formkörpern. Der Begriff Formkörper ist dabei grundsätzlich weit zu verstehen, wobei jedoch bevorzugt ein Formkörper aus einem organischen Material geformt wird. Insbesondere kann die hier beschriebene Erfindung dazu dienen, Formkörper basierend auf Holz- und Verbundwerkstoffen und/oder basierend auf schäumbaren beziehungsweise expandierbaren Materialien zu schaffen. Dabei umfasst der Begriff Formkörper sowohl zweidimensionale Formkörper, also etwa in Form einer Platte, oder auch dreidimensionale Formkörper mit einer beliebigen dreidimensionalen Struktur.

Hierzu umfasst die Mischung ein organisches strukturgebendes und/oder dimensionsstabilisierendes Material und ein Bindemittel zum Aufnehmen des strukturgebenden und/oder dimensionsstabilisierenden Materials. Der Ausdruck "strukturgebendes und/oder dimensionsstabilisierendes Material" bedeutet dabei insbesondere jedes Material, welches aufgrund seiner Struktur dem Werkstoff eine gewisse Festigkeit und Formstabilität verleihen kann, also wenigstens eines von strukturgebend und dimensionsstabilisierend ist. Das Bindemittel dient als Matrix beziehungsweise als Klebemittel, um das strukturgebende und/oder dimensionsstabilisierende Material zu verbinden und so einen stabilen Körper zu schaffen.

Beispiele für das strukturgebende und/oder dimensionsstabilisierende Material umfassen besonders bevorzugt lignocellulosehaltiges Material. Grundsätzlich kann das strukturgebende und dimensionsstabilisierende Material mechanisch oder thermomechanisch zerkleinert und/oder aufgeschlossen sein.

Unter "mechanisch oder thermomechanisch zerkleinertem und/oder aufgeschlossenem lignocellulosehaltigen Material" werden insbesondere Fasern, Späne, Strands oder Mischungen daraus verstanden.

Unter "Fasern" im Sinne der vorliegenden Erfindung werden insbesondere Holzfasern verstanden; die vorliegende Erfindung ist jedoch nicht darauf beschränkt, so dass unter dem Begriff "Fasern" auch Mischungen von Holzfasern und Kunststofffasern verstanden werden, sowie Fasern aus Ein- oder Mehrjahrespflanzen. Dabei bedeutet der Ausdruck "Fasern" insbesondere - bevorzugt lignocellulosehaltige - Fasern mit einer Länge von ≥ 0,5 mm bis ≤ 10 mm und einem Faserdurchmesser von ≥ 0,02 mm bis ≤ 1 mm. Bevorzugt sind insbesondere Fasern mit Länge von ≥ 1 mm bis ≤ 6 mm und einem Faserdurchmesser von ≥ 0,1 mm bis ≤ 1 mm.

Unter "Spänen" im Sinne der vorliegenden Erfindung wird insbesondere aus Waldindustrieholz zerspantes Holzmaterial verstanden sowie Späne aus Ein- oder Mehrjahrespflanzen, darüber hinaus gelten im Sinne der vorliegenden Erfindung insbesondere Sägenebenprodukte, wie Hobelspäne, Sägespäne, Schälspäne etc., sowie zerspante Partikel aus Gebrauchtspanplatten und Ausschussplatten ebenfalls als Spänen. Späne lassen sich in Deck- und Mittelschichtspäne unterteilen. Die Spangrößen unterscheiden sich dabei in Feingut (Deckschichtspäne mit etwa 0,3 mm bis 1 mm Länge und 0,2 mm Dicke) und Grobgut (Mittelschichtspäne mit etwa 1 mm bis 5 mm Länge, sowie 0,2 mm bis 0,5 mm Dicke).

Unter "Strands" versteht man spezielle, nämlich lange und schmale Schneidspäne, die durch ihre Formgebung für die richtungsorientierte und -unorientierte Streuung von OSB und USB-Platten besonders geeignet sind. Die Abmessungen betragen im Idealfall ca. 100 mm Länge und 10 mm Breite.

Unter der Bezeichnung "lignocellulosehaltiges Material" werden insbesondere alle Werkstoffe zusammengefasst, die zum Beispiel Holz, Getreidestroh, Hanf oder Flachs enthalten. Somit kann es vorteilhaft sein, dass das strukturgebende und/oder dimensionsstabilisierende Material ein lignocellulosehaltiges Material, insbesondere einen Holzwerkstoff, umfasst.

Jedoch kann gemäß einer bevorzugten Ausführungsform beim Holz- oder Verbundwerkstoff dieser bis zu 100 Gew.-% aus expandierbarem Material bestehen. Der Ausdruck "Holz und/oder Verbundwerkstoff" im Sinne der vorliegenden Erfindung soll somit im weitesten Sinne verstanden werden und ausdrücklich auch solche Materialien beinhalten, die (nur noch) aus einem expandierbaren Material beziehungsweise Granulat aufgebaut sind und keine Holzbestandteile (mehr) enthalten.

Der Term "expandierbares Material" beziehungsweise Granulat im Sinne der vorliegenden Erfindung kann auch als Popcorn bezeichnet werden und umfasst insbesondere alle Materialien, welche wie der Puffmais (*Zea mays, convar. Microsperma)* - gegebenenfalls nach entsprechender Einfettung bei einer schnellen Erwärmung zu hohen Temperaturen explodieren, indem das in dem Samen vorhandene Wasser schlagartig verdampft und so die im Samen enthaltene Stärke in eine schaumartige Konsistenz überführt. Ein solches Verhalten ist unter anderem von Mais, Quinoa-Korn, Amarant, Reis oder auch Weizen bekannt, Materialien, die auf diesen Grundstoffen basieren, werden im Sinne der vorliegenden Erfindung explizit auch als "expandierbares Material" bezeichnet und umfasst. Nach einer vorstehenden Explosion beziehungsweise Expandierung wird das expandierbare Material auch als expandiertes Material bezeichnet.

Neben der vorstehenden Beschreibung eines expandierbaren oder expandierten Materials kann ein derartiges Material auch ein schäumbares beziehungsweise geschäumtes Material umfassen.

Maiskörner können mit unterschiedlichen Methoden zum Schäumen oder Expandieren gebracht werden.

Gemäß einer bevorzugten Ausführungsform der Erfindung wird das für die Herstellung der Formkörper benutzte expandierte Material durch Puffing hergestellt beziehungsweise wird das expandierbare Material einem Puffing unterworfen. Dabei können je nach Anwendung unveränderte Körner verwendet werden oder es werden geeignete Samen, z. B. Futtermaiskörner zunächst geschrotet und die Kornbruchstücke anschließend unter Druck- und Temperatureinwirkung nach dem Bichsel-Verfahren (WO 1999042005A1) einem definierten Prozess expandiert. Weitere Verfahren zur Puffing der stärkehaltigen Körner sind bspw. Heizplatten, Heißluftmaschinen und Mikrowellen.

Bei einer alternativen Methode werden stärkehaltige Körner in einem Extruderverfahren zu einer schaumartigen Granulatform gebracht.

Somit kann es von Vorteil sein, wenn das organische strukturgebendes und/oder dimensionsstabilisierendes Material ein expandierbares oder expandiertes Material umfasst.

Zusätzlich zu dem vorbeschriebenen strukturgebenden und/oder dimensionsstabilisierenden Material enthält die Mischung ferner ein Bindemittel. Dies ist im Wesentlichen frei von Aldehyden, wie insbesondere frei von Formaldehyd. Das kann insbesondere von großem Vorteil sein, da meist ein Nachteil von herkömmlichen Bindersystemen ist, dass diese bei der Herstellung der Formkörper als auch bei der Lagerung Aldehyde, wie insbesondere Formaldehyd, ausdünsten. Dies gilt beispielsweise für Bindersysteme, welche auf Harnstoff-Formaldehyd-Harzen basieren.

Es können somit die Nachteile überwunden werden, wonach das enthaltene Harz hydrolyseanfällig ist und daher auch die damit hergestellten Formkörper auf lange Sicht Formaldehyd emittieren. Gegenüber herkömmlichen Bindern können somit signifikante ökologische Vorteile erzielt werden.

Der Begriff "im Wesentlichen frei von Aldehyden" soll dabei insbesondere bedeuten, dass Aldehyde, isoliert oder in Form von Harzen, in einem Anteil von kleiner oder gleich 10 Gew.-%, insbesondere von kleiner oder gleich 5 Gew.-%, besonders bevorzugt kleiner oder gleich 0,5 Gew.-%, ganz besonders bevorzugt von 0 Gew.-%, bezogen auf die das Bindemittel, vorliegen.

Weiterhin ist es bei der beschriebenen Mischung vorgesehen, dass das Bindemittel eine wasserhaltige Zusammensetzung wenigstens aufweisend Lactosemonohydrat umfasst. Insbesondere eine derartige Zusammensetzung des Bindemittels kann zusätzlich zu der vorbeschriebenen Freiheit von Formaldehyd die Vorteile eines herkömmlichen Binders aufweisen, nämlich vorteilhafte Adhäsionskräfte und Kohäsionskräfte ausbilden, so dass unter Verwendung dieses Binders ein stabiler Formkörper erhalten werden kann.

Denn durch das verwendete Lactosemonohydrat, welches von der reinen Lactose, also der hydratfreien Lactose, zu unterscheiden ist, können insbesondere bei der herkömmlichen Herstellung für Formkörper, insbesondere unter Verwendung erhöhter Temperaturen, etwa in einem Bereich von ≥ 50 °C bis ≤ 200 °C, etwa von ≥ 80 °C und ≤ 140 °C, bevorzugt von ≥ 90 °C bis ≤ 120 °C, insbesondere von ≥ 65 °C bis ≤ 160 °C, kohäsive Kräfte des Lactosemonohydrates ausgebildet werden, die gemeinsam mit adhäsiven Kräften eine feste Leimfuge ausbilden. Somit bildet das Lactosemonohydrat insbesondere aus Mutterlauge, wie nachfolgend beschrieben, die entscheidende Rolle bei der Verklebung der vorstehend genannten strukturgebenden und/oder dimensionsstabilisierenden Materialen als Rohstoffe.

Die beschriebene Erfindung erlaubt es somit, sehr gute Bindereigenschaften beizubehalten und dabei dennoch vorzugsweise vollständig auf Ausdünstungen von Formaldehyd zu verzichten.

Es hat sich weiterhin als vorteilhaft herausgestellt, dass das Bindemittel, insbesondere im Feststoffanteil, Lactosemonohydrat, Asche, und ein oder mehrere anorganische Salze aufweist. Eine derartige Mischung kann insbesondere erreicht werden, wenn das Lactosemonohydrat beziehungsweise der Binder aus Molke beziehungsweise aus sogenannter Mutterlauge erzeugt wird beziehungsweise wenn das Lactosemonohydrat in einem Molkeprodukt beziehungsweise in Mutterlauge vorliegt.

Als "Mutterlauge" wird die ursprünglich aus Molkenkonzentrat stammende Flüssigkeit bezeichnet, aus der sich bei der Stoffreinigung durch Umkristallisation ein gewünschter Stoff in Form von Kristallen abgeschieden hat. Im Konkreten wird Molkenkonzentrat filtriert, insbesondere ultrafiltriert. Dabei entstehen ein proteinreiches Retentat und ein lactosereiches Permeat. Für die Gewinnung der Mutterlauge wird ausschließlich das Permeat verwendet, welches optional entfärbt, aufkonzentriert und kristallisiert wird. Die Mutterlauge, bzw. das daraus konzentrierte TEM (Teilentzuckertes Molkekonzentrat) fällt bei dem Dekantieren des kristallisierten Lactose-Breis an. Die Lactose beziehungsweise das Lactosemonohydrat wird anschließend zentrifugiert und getrocknet. In technischen Verfahren anfallende Mutterlaugen werden bisweilen recycliert, um die Ausbeuten zu optimieren.

Unter "Mutterlauge" wird weiterhin gemäß einer Ausführungsform der vorliegenden Erfindung ein besonderes Stoffgemisch verstanden, welches, bei seiner Verarbeitung, die folgende Zusammensetzung aufweist (jeweils Gew.-%/Gew.-% der gesamten Mischung): ≥ 15 % bis ≤ 45 % multifunktionale Disaccharide, insbesondere Lactosemonohydrat; 15 % Asche, ca. 0,5 bis 1,5 % Stickstoff; Salze, Calcium, Magnesium, Natrium, Phosphor; wobei der Rest durch freies Wasser gebildet wird. Unter Asche werden insbesondere, wie dem Fachmann aus der Milchverarbeitung bekannt, aus der Molke stammende Mineralien verstanden.

Der Stickstoff liegt in gebundener organischer oder anorganischer Form vor, insbesondere als Nitrat, Nitrit, insbesondere als Aschebestandteil, Proteinstickstoff, Peptide, alpha-Lactalbumin, beta-Lactoglobulin, Harnsäure und Orotsäure und/oder grundsätzlich als Stoffwechselprodukte.

Als Salze können insbesondere als Nitrate, Chloride und/oder Phosphate vorliegen.

Das Verwenden von Mutterlauge als Edukt für die Binderherstellung hat eine Reihe von ökonomischen und ökologischen Vorteilen. Da es sich bei der Mutterlauge im Weitesten um ein Nebenprodukt bei der Käseherstellung beziehungsweise Milchverarbeitung und aus der Molke entstammt handelt, orientiert es sich preislich an UF-Harzen und stellt somit eine ökonomische Alternative zur Herstellung von Verbundwerkstoffen dar. Ökologisch gesehen bedeutet der Einsatz des in der Mutterlauge enthaltenen Lactosemonohydrat als Bindemittel eine sinnvolle Wertschöpfung und verursacht bei der Herstellung und Gebrauch der hergestellten Produkte keinerlei schädliche Emissionen und fixiert langfristig CO₂. Die mittels Lactosemonohydrat als Bindemittel hergestellten Produkte sind vollständig recylisierbar und können CO₂-neutral im Sinne des Kreislaufwirtschafts-gesetzes weiterverwendet werden.

Bevorzugt kann das Bindemittel ferner einen Feststoffanteil in einem Bereich von ≥ 30 Gew.-% bis ≤ 70 Gew.-% aufweisen, wobei diese Anteile sich auf die Mischung des Bindemittels und somit auf das Bindemittel als Ganzes beziehen. Es hat sich gezeigt, dass insbesondere in dieser Ausgestaltung unter prozesstechnisch gut umsetzbaren Pressparametern, wie insbesondere Druck, Temperatur und Presszeit, sich vorteilhaft Formkörper ausbilden lassen, welche hinsichtlich der Stabilität und der Kohäsions- und Adhäsionseigenschaften des Binders Vorteile aufweisen.

Hinsichtlich der Klebeeigenschaften des Bindemittels insbesondere in Verwendung mit einem lignocellulosehaltigem Material hat es sich weiterhin als vorteilhaft herausgestellt, dass das Bindemittel ferner ein Hydrophobierungsmittel aufweist. Bevorzugte Hydrophobierungsmittel können beispielsweise Wachse, wie etwa Bienenwachse, Zuckerrohrwachse oder Paraffine umfassen. Es hat sich gezeigt, dass der Anteil an Hydrophobierungsmittel, angegeben in Gew.-% zu Gew.-% des Bindemittels, bevorzugt ≥ 0,5 % bis ≤ 2 % beträgt.

Unter einem Hydrophobierungsmittel kann im Sinne der vorliegenden Erfindung insbesondere ein Mittel verstanden werden, welches die hydrophoben Eigenschaften des Bindemittels und damit des hergestellten Formkörpers vergrößert. Beispielsweise können durch eine Hydrophobierung beziehungsweise durch das Hydrophobierungsmittel die oberflächennahen, kapillarsaugenden Poren temporär gegen das Eindringen von Feuchtigkeit imprägniert werden. Somit kann durch die Zugabe eines Hydrophobierungsmittels die Feuchteresistenz der erzeugten Formkörper verbessert werden.

Weiterhin hat es sich hinsichtlich der Bindereigenschaften als vorteilhaft erwiesen, wenn die wasserhaltige Zusammensetzung des Bindemittels einen pH-Wert in einem Bereich von ≥ 4 bis ≤ 7 aufweist.

Grundsätzlich kann der Binder weitere Additive zusätzlich zu dem bereits beschriebenen Hydrophobierungsmittel aufweisen, wie etwa Insektizide, Fungizide oder auch Flammschutzmittel.

Es kann weiterhin bevorzugt sein, dass der Binder in einer Menge vorliegt von ≥ 5 Gew.-% bis ≤ 20 Gew.-%, bezogen auf das strukturgebende und/oder dimensionsstabilisierende Material. Es hat sich gezeigt, dass unter Verwendung derartiger Bindermengen Formkörper ausgebildet werden können, welche gute mechanische Eigenschaften aufweisen und ferner prozesstechnisch gut herstellbar sind.

Dem Vorstehenden folgend ist ein Aspekt der vorliegenden Erfindung weiterhin die Verwendung einer Mischung, die im Wesentlichen frei von Aldehyd, insbesondere frei von

Formaldehyd, ist und eine wasserhaltige Zusammensetzung wenigstens aufweisend Lactosemonohydrat umfasst, als Bindemittel zur Herstellung eines Formkörpers, wie etwa einer Holzwerkstoffplatte.

Hinsichtlich weiterer technischer Merkmale und Vorteile der verwendeten Mischung und der Verwendung wird dabei explizit auf die entsprechende Beschreibung des Verfahrens und des Formkörpers verwiesen, wobei entsprechende technische Merkmale und/oder Vorteile auf die Mischung und die Verwendung zu übertragen sind.

Beschrieben wird ferner ein Verfahren zum Herstellen eines Formkörpers, aufweisend die Verfahrensschritte:
i) Bereitstellen einer Mischung wie vorstehend beschrieben; und
ii) Formen der Mischung unter erhöhter Temperatur und erhöhtem Druck oder reduziertem Druck zu einem Formkörper.

Durch ein derartiges Verfahren lassen sich Formkörper herstellen, welche aus an sich bekannten strukturgebenden und/oder dimensionsstabilisierenden Materialen aufgebaut sind und dabei einen vorteilhaften Binder beziehungsweise ein vorteilhaftes Bindemittel aufweisen, welches herkömmliche Binder ersetzen kann.

Das Verfahren umfasst gemäß Verfahrensschritt i) das Bereitstellen einer Mischung, wie diese vorstehend im Detail beschrieben ist. Hinsichtlich der Mischung, insbesondere deren Eigenschaften und Zusammensetzung, wird auf die vorstehende Beschreibung verwiesen.

Um aus dieser Mischung einen Formkörper zu formen umfasst das Verfahren gemäß dem Verfahrensschritt ii) das Formen der Mischung unter erhöhter Temperatur und erhöhtem Druck oder unter erhöhter Temperatur und reduziertem Druck zu einem Formkörper. Dabei wird unter einer erhöhten Temperatur eine zur Raumtemperatur (22°C) erhöhte Temperatur und unter erhöhtem Druck ein zu Umgebungsdruck (1bar) erhöhter Druck und unter reduziertem Druck ein zu Umgebungsdruck (1bar) reduzierter Druck verstanden.

Hinsichtlich des Formens können zur Herstellung der beispielsweise zwei-, zweieinhalb oder dreidimensionalen Formkörper als solche bevorzugt zwei Techniken benutzt werden.

Gemäß einer Ausgestaltung kann das sogenannte Formpressen verwendet werden. Dieses Verfahren ist besonders bevorzugt für flächige Formkörper, auch zweidimensionale Formkörper genannt. Zu Beginn des Verfahrens wird die Formmasse, d. h. die vorstehend beschriebene Mischung, ggf. einem weiteren Additiv, wie etwa Hydrophobierungsmittel, Insektizide, Fungizid, Flammschutzmittel, in eine Kavität eingebracht und unter Einsatz eines Druckkolbens geschlossen. Durch den Druck erlangt die Mischung, wie etwa ein Granulat-Mutterlauge bzw. Granulat-TEM-Gemisch, die vom Werkzeug vorgegebene Geometrie in einer gewünschten Form. Die in der Kavität vorhandene als Formmasse dienende Mischung wird unter Druck und beispielsweise konduktiver Wärmeübertragung, etwa durch elektrische Erhitzung der Kavität oder auch durch Dampf, Trockendampf, Mikrowellen, oder Radiowellenfrequenztechnologie aufgeheizt. Dadurch kann die Mischung unter Ausbildung des Formkörpers unter einer Mitwirkung von Druck und Temperatur gepresst.

Gemäß einer weiteren Ausgestaltung kann Verfahrensschritt ii) ausgeführt werden durch die Verwendung sogenannter Formteilautomaten beziehungsweise Formkörperautomaten. Bei dieser Technik werden meist Spezial-Formteilautomaten benutzt, welche höhere Drücke und/oder Temperaturen ermöglichen. Dabei besteht der erste Prozessschritt im pneumatischen Komprimieren der Formmasse beziehungsweise der Mischung, also beispielsweise das Granulat-Mutterlauge bzw. Granulat-TEM-Gemisch mit ggf. weiterem Additiv, und das Befüllen des geschlossenen Spezial-Formteilautomaten mit der komprimierten Formmasse. Alternativ kann auch die Formmasse durch ein Vakuum in die Kavität gefördert werden. Mit Hilfe von Temperatur und Druck wird die Formmasse beispielsweise mittels Dampf, Trockendampf, Mikrowellen oder Radiowellen auf die gewünschte Aushärtetemperatur gebracht und dadurch die Mischung vollständig miteinander vernetzt. Der Formteilautomat weist also eine insbesondere bis auf Zugang oder Zugänge beziehungsweise Anschlüsse für Formmasse, Vakuum oder ähnliches geschlossene Kavität auf. Diese Ausgestaltung kann insbesondere für dreidimensionale Formkörper bevorzugt sein.

Bevorzugt wird Verfahrensschritt ii) bei einer Temperatur in einem Bereich von ≥ 50 °C bis ≤ 200 °C, etwa von ≥ 80 °C und ≤ 140 °C, bevorzugt von ≥ 90 °C bis ≤ 120 °C, insbesondere von ≥ 65 °C bis ≤ 160 °C, ausgeführt. Es hat sich gezeigt, dass Lactosemonohydrat insbesondere in Mutterlauge als Bindemittel bei derartigen Temperaturen bevorzugte adhäsive und kohäsive Eigenschaften ausbildet, so dass sich ein besonders stabiler Formkörper ausbilden kann.

Aus den gleichen Gründen kann es von Vorteil sein, wenn Verfahrensschritt ii) ausgeführt wird unter Anwendung eines Druckes, der bei einem Überdruck in einem Bereich liegen kann von ≥ 0,1 bar bis ≤ 10 bar, bevorzugt ≤ 5 bar, sowie insbesondere ≤ 2 bar. Eine Herstellung des Formkörpers ist alternativ auch unter Unterdruck möglich. Bevorzugte Unterdrücke liegen dabei bevorzugt zwischen ≥ 0,1 bar und ≤ 3 bar.

Somit kann grundsätzlich, wie etwa bei den vorbeschriebenen Verfahren zunächst die Mischung, insbesondere unter Anwendung eines Überdrucks, in eine Form gepresst werden und der Formkörper dann unter Über- oder Unterdruck geformt werden.

Durch den Unterdruck in den Kavitäten wird die Aushärtetemperatur der Formkörper im Verfahren, wie etwa mit elektromagnetischen Wellen (Mikrowellen/Radiowellen), besonders rasch erhöht und somit eine Verkürzung der Verweilzeit mit gleichzeitiger Verbesserung der mechanisch-physikalischen Eigenschaften bewirkt. Der mechanische Pressdruck in den Kavitäten wird dadurch erheblich reduziert. Vorteil des Überdrucks kann ferner in einer einfachen Prozesstechnik liegen.

Hinsichtlich weiterer technischer Merkmale oder Vorteile des Verfahrens wird auf die Beschreibung der Mischung, der Verwendung, des Formkörpers und der Beispiele Bezug genommen, und umgekehrt.

Gegenstand der vorliegenden Erfindung ist weiterhin ein Formkörper, der hergestellt ist nach einem Verfahren, wie dies vorstehend beschrieben ist.

Ein derartiger Formkörper ist somit hergestellt durch Heißformen einer Mischung, wie diese vorstehend beschrieben ist. Entsprechend weist der Formkörper ein organisches strukturgebendes und/oder dimensionsstabilisierendes Material auf, das in einem Bindemittel verteilt ist. Das Bindemittel wurde insbesondere durch Heißformen von Lactosemonohydrat behandelt und ist im Wesentlichen frei von Aldehyd, wie insbesondere Formaldehyd.

Die erfindungsgemäßen Formkörper und damit die gemäß dem erfindungsgemäßen Verfahren hergestellten Formkörper können bei einer Vielzahl von Anwendungen eingesetzt werden, etwa in keiner Weise hierauf beschränkt und beispielhaft Verpackungsmaterialien (z. B. Kühlboxen, Schutzverpackung für Elektrogeräte, Gewürzdosen etc.), Automobilteile (z. B. Kopfstützen, Sonnenblenden, Kindersitzschalen, Dämmmatten für Türinnenverkleidungen und Wohnmobil-Kabinenverkleidungen), Dämmmaterialien (z. B. Elektrogeräte), Geschirr, Sportartikel (z. B. Yoga-Rollen, Nackenrollen), Spielzeug (z. B. Würfel, Bretter für Gesellschaftsspiele, Puzzle), Bilderrahmen, Präsenzkörbe etc., Pflanzsäcke und ähnliches.

Die Formkörper unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Diese Verbundwerkstoffe können grundsätzlich sämtliche nachwachsenden Rohstoffe, wie etwa Holzfasern oder Holzspäne oder auch geschäumtes bzw. expandiertes Material beziehungsweise Granulat oder auch Kombinationen daraus umfassen, etwa zum Ausbilden von Holz- und/oder Verbundwerkstoffen, etwa als zwei-, zweieinhalb- oder dreidimensionale Formkörper.

Unter einem zweieinhalb-dimensionalen Formkörper ist ferner eine eindimensionale Fläche zu verstehen, die zu einer Seite dreidimensional ausgestaltet ist. Beispielsweise handelt es sich um Verpackungs-Schutzecken, die beispielsweise an einer Seite eine ebene Fläche aufweisen und an den anderen Seiten eine dreidimensionale Struktur aufweisen.

Dabei werden unter "Holz- und/oder Verbundwerkstoffen" im Sinne der vorliegenden Erfindung insbesondere Faserverbundstoffe, Spanplatten und Oriented oder Unoriented Strand Boards sowie Dämmstoffe und Dämmplatten verstanden und unter "zwei-, zweieinhalb- und dreidimensionalen Formkörper" Produkte, wie sie z. B. für Verpackungen, in der Automobilindustrie (Interieur und Exterieur), als Schallabsorber, für die Wärmedämmung oder in der Konsumgüterindustrie verwendet werden. Derartige Formkörper sollten leicht herstellbar und ebenso leichtgewichtig sein, und vorzugsweise ganz oder größtenteils aus nachwachsenden Rohstoffen bestehen.

Gemäß einer bevorzugten Ausführungsform der Erfindung sind somit die Holz- und/oder Verbundwerkstoffe ausgewählt aus der Gruppe enthaltend Faserverbundstoffe, Spanplatten, Oriented oder Unoriented Strand Boards, Dämmstoffe und Dämmplatten und anderen Formkörpern.

Unter "Faserverbundstoffen" im Sinne der vorliegenden Erfindung werden insbesondere ein- oder mehrschichtige Faserplatten, Mitteldichte Faserplatten (MDF) und Harte Faserplatten (HDF), mit einer Rohdichte ≥ 400 kg/m³ bis ca. 1200 kg/m³, Dämmstoffe oder Dämmplatten oder poröse Faserplatten mit einer Rohdichte von 20 kg/m³ bis 400 kg/m³ verstanden. MDF-Platten besitzen i. d. R. eine Rohdichte ≥ 400 kg/m³ bis 900 kg/m³ und Dicken zwischen 3 mm bis 60 mm. HDF-Platten haben i. d. R. Rohdichten ≥ 900 kg/m³ und Dicken zwischen 1 mm und 10 mm. Poröse Faserplatten und Holzfaserdämmstoffe/-platten haben i. d. R. Rohdichten < 400 kg/m³ und Dicken bis zu 200 mm.

Unter "Spanplatten" im Sinne der vorliegenden Erfindung werden insbesondere ein- oder mehrschichtige Spanplatten i. d. R. mit einer Rohdichte von etwa 400 kg/m³ bis 750 kg/m³ mit Dicken von 7 mm bis 70 mm verstanden. Zusätzlich werden auch ein- oder mehrschichtige Dämmstoffe und Dämmplatten aus Spänen, welche auch eine geringere Rohdichte als normale Spanplatten haben können, verstanden. Diese besitzen meist Rohdichten von < 400 kg/m³.

Unter "Oriented Strand Boards" (OSB) im Sinne der vorliegenden Erfindung werden insbesondere mehrschichtige Grobspanplatten mit kreuzweiser Orientierung der Späne (bevorzugt Strands) verstanden. Durch die Orientierung von Strands können bei Verwendung geeigneter Klebstoffe die Festigkeitswerte gegenüber Spanplatten deutlich erhöht werden.

Unter "Unoriented Strand Boards" (USB) im Sinne der vorliegenden Erfindung versteht man insbesondere, dass die Strands nicht kreuzweise sondern unorientiert und unabhängig voneinander gestreut sind. Der Vorteil bei Produktion von USB-Platten ist, dass diese auch an konventionellen Spanplattenanlagen nach dem Wurf- und Windstreuverfahren hergestellt werden können.

Es sei darauf hingewiesen, dass gemäß der vorliegenden Erfindung die Holz- und/oder Verbundwerkstoffe einschichtig oder mehrschichtig vorliegen können. Ebenso können die Holz- und/oder Verbundwerkstoffe entweder in Reinform (eine Art von Fasern/Späne/Strands) oder Mischform (kombiniert mindestens zwei Arten von jeweils Fasern/Späne/Strands oder Mischungen daraus) vorliegen.

Hinsichtlich weiterer technischer Merkmale oder Vorteile des Formkörpers wird auf die Beschreibung der Mischung, der Verwendung, des Verfahrens und der Beispiele Bezug genommen, und umgekehrt.

Nachfolgend wird die Erfindung unter Bezugnahme auf die anliegende Zeichnung und die Beispiele exemplarisch erläutert, wobei die nachfolgend dargestellten Merkmale sowohl jeweils einzeln als auch in Kombination einen Aspekt der Erfindung darstellen können, und wobei die Erfindung nicht auf die folgende Zeichnung, die folgende Beschreibung und das folgende Ausführungsbeispielbeschränkt ist.

Es zeigt:

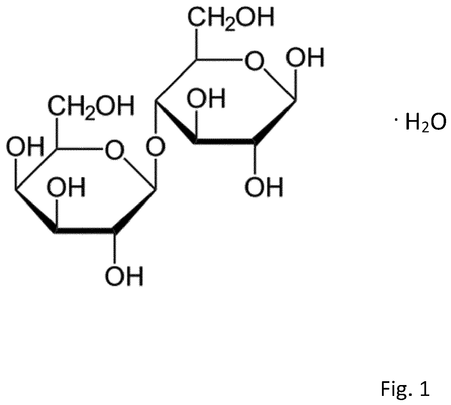

Fig. 1 die chemische Struktur von Lactosemonohydrat.

In der Figur 1 ist die Struktur von Lactosemonohydrat gezeigt.

Dabei ist zu erwähnen, dass Lactosemonohydrat in einem Einsatz als Bindemittel signifikante Vorteile aufweist. Dies gilt insbesondere für einen Einsatz in oder aus Molke beziehungsweise Mutterlauge, aber auch als Reinstoff. Darüber hinaus gelten die Vorteile auch gegenüber der hydratfreien "reinen" Lactose.

Als Vorteile sei hier zunächst eine hohe Strukturstabilität zu nennen. So können die mechanisch-technologischen Eigenschaften, wie Querzugfestigkeiten, Biegefestigkeiten oder Druckfestigkeiten der Formkörper deutlich verbessert werden. Ebenso ist die Verarbeitung bzw. Applikation des Lactosemonohydrats auf die zu verklebenden Materialien sehr effektiv, zeitsparend und kostengünstig möglich. Darüber hinaus kann die Wasseraufnahme reduziert werden.

Hinsichtlich eines Einsatzes aus Molke beziehungsweise aus Mutterlauge kann angenommen werden, dass die angewendete Rezeptur und die darin enthaltenen Stoffe wie Lactosemonohydrat (Schmelztemperatur 202 °C), der Proteine (Denaturierung durch Temperatur und Druck und die damit einhergehende Veränderung der Oberflächenstruktur) und der Peptide (Van der Waals Kräfte) im Komplex einen Einfluss auf die Klebeeigenschaften besitzen.

### Beispiele

### a) Herstellung von Holz- und/oder Verbundwerkstoffen

### 1. Spanplatte

Zur Herstellung der Spanplatten wurden Deckschichtspäne (etwa 0,2 bis 0,4 mm dick) und Mittelschichtspäne (etwa 0,3 bis 0,8 mm dick) verwendet. Die Mittel- und Deckschichtspäne wurden bis auf 2 % bis 6 % Restfeuchte getrocknet. Die Späne wurden in einem Beleimungsaggregat nach einem Umwälzverfahren mit dem Bindemittel, bestehend aus 12 % Lactosemonohydrat-Bindemittel (enthaltend zusätzlich zu Lactosemonohydrat (in Gew.-% bezogen auf das Bindemittel) 1 % Hydrophobierungsmittel, 15 % Asche, ca. 0,5 bis 1,5 % Stickstoff; Salze, Calcium, Magnesium, Natrium, Phosphor, wobei der Rest durch freies Wasser gebildet wird) in der Deckschicht (DS) und 10 % Lactosemonohydrat-Bindemittel (Zusammensetzung wie in der DS) in der Mittelschicht (MS), versehen.

Die beleimten Späne wurden manuell auf Format (Spankuchen) von 50 cm x 50 cm gestreut, in der Weise, dass die feineren Deckschichtspäne jeweils die Außenschichten bildeten und die gröberen Mittelschichtspäne den Kern der Aufstreuung (Spankuchen) bildeten (siehe Tab 1).

Die Spankuchen wurde auf Feuchtgewicht geprüft und anschließend bei 190° C für 8-14 mm/s verpresst. Die Platten wurden der Presse entnommen und an der Luft abgekühlt. Danach wurden die Platten besäumt, 0,1 - 0,2 mm abgeschliffen und nach einer Klimatisierung bei 20° C und 65 % rel. Luftfeuchtigkeit auf ihre physikalischtechnologischen Eigenschaften geprüft.

**Tab. 1: Plattenaufbau und Beleimungs-Parameter der hergestellten dreischichtigen Spanplatten**

| **Dreischichtige Spanplatten aus industrieüblichen Deck- und Mittelschichtspänen** | | |
|---|---|---|
| **Plattenaufbau** | Plattenformat (1 x b) [mm] | 500 x 500 |
| | Plattendicke [mm] | 16 (DS), 20 (MS) |
| | Sollrohdichte [kg/m³] | 650 |
| | Presstemperatur [°C] | 190 |
| | Presszeitfaktor [s/mm] | 8-14 |
| **Bindemittel Lactosemonohydrat aus Mutterlauge** | Feststoffgehalt [%] | ca. 60 |
| | Menge bez. auf atro Span [%] | 12 (DS), 10 (MS) |
| | Hydrophobierungsmittel (Wachse) [%] | 1 % (je DS und MS) |

Die hergestellten Platten wiesen eine Rohdichte von ca. 650 kg/m³ auf. Der Feuchtegehalt der Platten lag bei 9,5 %. Die Anforderungen an die Querzugfestigkeit der EN 312 liegen für Platten des Typs P2 bei 0,35 N/mm².

**Tab. 2: Lactosemonohydrat gebundene Spanplatten (Rohdichte 650 kg/m³)**

| Plattendicke | Querzugsfestigkeit | Biegefestigkeit | Dickenquellung % nach 24 h | Formaldehyd-emission (Gasanalyse) |
|---|---|---|---|---|
| [mm] | [N/mm²] | [N/mm²] | [%] | [mg/m²h] |
| 20 | 0,38 | 13,5 | 17,4 | < 0,09 |
| 16 | 0,42 | 14 | 16,5 | < 0,11 |

Es konnte somit gezeigt werden, dass unter Verwendung eines Bindemittels gemäß der vorliegenden Erfindung ein Formkörper mit sehr guten mechanischen Eigenschaften und insbesondere einer hohen Stabilität geformt werden konnte. Die Anforderungen an die Querzugfestigkeit der EN 312 konnten eingehalten werden. Die Formaldehydemissionen waren zu vernachlässigen, da lediglich geringe natürliche Emissionen aus dem Holz vorhanden waren.

### 2. Faserplatte (MDF)

Die Herstellung der MDF-Platte erfolgte nach dem Trockenverfahren. Zunächst wurden Holzfasern mit Lactosemonohydrat-Bindemittel (enthaltend Hydrophobierungsmittel) beleimt. Die Fasern wurden anschließend durch einen Trocknungsaggregat bei 80 °C schonend getrocknet. Die beleimten Fasern wurden zu einem Faservlies gestreut, dass in den Maßen 50 cm x 50 cm bei 210 °C in der Heißpresse verpresst wurde.

Alle hergestellten Platten haben eine Zielrohdichte von 780 kg/m³, bei einer Stärke von 12 mm.

**Tab. 3: Plattenaufbau und Beleimungs-Parameter der hergestellten MDF**

| **Mitteldichte Faserplatten** | | |
|---|---|---|
| **Plattenaufbau** | Plattenformat (1 x b) [mm] | 500 x 500 |
| | Plattendicke [mm] | 12 |
| | Sollrohdichte [kg/m³] | 780 |
| | Presstemperatur [°C] | 210 |
| | Presszeitfaktor [s/mm] | 8-18 |
| **Bindemittel Lactosemonohydrat aus Mutterlauge** | Feststoffgehalt [%] | ca. 50 |
| | Menge bez. auf atro Faser [%] | 12 |
| | Hydrophobierungsmittel [%] | 1,5 |

Nach der Herstellung wurden die Platten geschliffen und besäumt und nach Klimatisierung im Normalklima zu Prüfkörpern ausgeformt und nach den gängigen Prüfnormen geprüft. Ergebnisse der durchgeführten Versuche:

**Tab. 4: Lactosemonohydrat gebundene Faserplatten (Rohdichte 780 kg/m³)**

| Platten-dicke | Querzugsfestigkeit | Biegefestigkeit | Dickenquellung nach 24 h | Formaldehyd-emission (Gasanalyse) |
|---|---|---|---|---|
| [mm] | [N/mm²] | [N/mm²] | [%] | [mg/m²h] |
| 12 | 0,68 | 33 | 18,5 | < 0,12 |

Es kann somit gesagt werden, dass auch die hergestellten MDF-Platten gute mechanische Eigenschaften aufweisen, der Binder somit herkömmliche Binder, wie etwa UF-Binder, ersetzen kann. Die Formaldehydemissionen waren zu vernachlässigen.

### 3. Dämmplatten

Die Beleimung der Fasern und Vliesbildung der Fasern erfolgte analog zum Herstellverfahren der MDF-Platte. Zusätzlich fand noch eine Beleimung mit 0,5 % pMDI (polymeres Methyl-Di-Isocyanat) durchgeführt. Das Vlies wurde anschließend in die Heißpresse überführt, oder alternativ in ein Aggregat zur Aushärtung von Dämmstoffen.

Nach einem manuellen Einfüllen der Fasern in das Aggregat und dem Verdichten des Faservlieses auf eine Ziel- und Enddicke von 35 mm wurde der Aushärtungsprozess vollzogen. Im Anschluss an den Aushärtungsprozess aller Variationen wurden die fertigen Holzfaser-Dämmstoffplatten der Presse entnommen und im Normklima konditioniert.

**Tab. 5: Plattenaufbau und Beleimungs-Parameter der hergestellten Dämmplatten**

| **Dämmplatten** | | |
|---|---|---|
| **Plattenaufbau** | Plattenformat (b x 1) [mm] | 500 x 500 |
| | Plattendicke [mm] | 35 |
| | Sollrohdichte [kg/m³] | 160 |
| | Aushärtetemperatur [°C] | 160 - 170 °C |
| | Presszeitfaktor [s/mm] | 6-16 |
| **Bindemittel** | Feststoffgehalt [%] Lactosemonohydrat in Mutterlauge | ca. 60 |
| | Menge bez. auf atro Faser [%] | 12 % Lactosemonohydrat und eine Variante mit 6 % |
| | | Lactosemonohydrat und 0,5 % pMDI |
| | Hydrophobierungsmittel [%] | 1,5 |

Ergebnisse der durchgeführten Versuche:
Die hergestellten Dämmstoffplatten wiesen eine Rohdichte von ca. 160 kg/m³ auf. Tabelle 6 zeigt verschiedene mechanisch-technologische Eigenschaften.

**Tab. 6: Dämmstoffplatten (Rohdichte 160 kg/m³)**

| Variante | Plattendicke | Querzugfestigkeit | Druck - festigkeit | Kurzzeitige Wasser - aufnahme |
|---|---|---|---|---|
| | [mm] | [kPa] | [kPa] | [kg/m²] |
| 12 % Lactosemonohydrat in Mutterlauge | 35 | 42 | 290 | 1,6 |
| 6 % Lactosemonohydrat in Mutterlage + 1 % pMDI | 35 | 48 | 310 | 1,9 |

Wie bei Spanplatten und MDF erhalten auch mit Lactosemonohydrat gebundene Dämmstoffe sehr gute mechanisch technologische Eigenschaften. Bis auf die kurzzeitige Wasseraufnahme, die bei kommerziellen Holzfaserdämmstoffen bei etwa 1,0 kg/m³ liegt, sind die Querzug- und Druckfestigkeiten der erfindungsgemäßen Platten auf gleichem Niveau mit handelsüblichen Holzfaserdämmplatten, gebunden mit pMDI.

### 4. Pflanzsäcke ("Grow-Bags")

Die Beleimung der Fasern und Vliesbildung der Fasern erfolgte analog zum Herstellverfahren der MDF. Das Vlies wurde anschließend in eine Heißpresse überführt oder alternativ in ein gängiges Aggregat zur Aushärtung von Dämmstoffen.

Grow-Bags dienen dabei insbesondere zur Anzucht von Gemüse-, Zierpflanzen und Forstpflanzen.

Zunächst wurden Holzfasern mit 12 % auf atro Faser Lactosemonohydrat in Mutterlauge beleimt. Nach einer Vliesbildung wurden die Grow-Bags auf eine Ziel- und Enddicke von 120 mm und eine Rohdichte von 140 kg/m³ verdichtet ausgehärtet. Im Anschluss an den Aushärtungsprozess aller Variationen wurden die fertigen Grow-Bags der Presse entnommen und im Normklima konditioniert. Auch als Grow-Bags bezeichnete Pflanzsäcke werden zur Anzucht von Sämlingen aller Art für den Gemüse und Landschaftsbau verwendet und zeichnen sich durch eine hervorragende Nährstoffhaushalt, eine ideale Wasseraufnahmekapazität und Dimensionsstabilität auf. Nach ihrem Einsatz können die Grow-Bags kompostiert werden oder einfach im Erdreich unter Humusbildung abgebaut werden.

Bei den erfindungsgemäßen Grow-Bags aus Holzfasern und Lactosemonohydrat wurden folgende positive Eigenschaften ermittelt:
- überdurchschnittliche Formstabilität während der Vegetationszeit
- sehr gute Luftdurchlässigkeit
- gute Wasserhaltefähigkeit
- an die Kultur angepasste Kapillarität
- schnelles Abtrocknen der Oberfläche
- rasche Durchwurzelung
- keine keimhemmenden Stoffe
- keine Festlegung von Nährstoffen.

Grundsätzlich sei erwähnt, dass die wesentlichen Parameter der hergestellten Formkörper abhängig sind etwa vom Bindemittel, der Presszeit und der Temperatur und Pressdruck bzw. Unterdruck, sowie der Rohdichte des Formkörpers. Bei jedem Produkt können die Parameter angepasst werden, um die optimalen Festigkeits- und hygrischen Eigenschaften zu erhalten.

### b) Herstellung von zwei-, zweieinhalb- und dreidimensionalen Formkörpern aus expandiertem oder geschäumtem Granulat mit Bindemittel auf Basis Lactosemonohydrat

Zur Herstellung von Formkörpern aus expandiertem oder geschäumtem Granulat mittels Radiowellentechnologie wurde unterschiedlich vorcodiertes Granulat mit Lactosemonohydrat als Bindemittel versehen.

Zum Coating wurde Harnstoff-Formaldehyd-Harz (UF, BASF Kaurit 350) oder PLA (Poly-Lactic-Acid) oder Gelatine verwendet. In der ersten Stufe wurde das UF-Harz oder PLA mit jeweils 4 Gew.-% atro (bezogen auf das Popcorngranulat) aufgetragen und getrocknet. Anschließend 8 Gew.-% Lactosemonohydrat in einem Beleimungsaggregat auf das Popcorn gesprüht. In zweiten Prozessschritt wurde das beleimte Material durch einen Förderautomaten mittels Injektionsdüsen in die Kavität des Formteilautomaten gefördert, in welcher ein optionaler Druck (z. B. 0,1 bis 6 bar) und ca. 5 bis 7 kV Radiowellen erzeugt werden. Je nach Dicke und Rohdichte des Formkörpers wurden Verweilzeiten von 10 bis 30 Sekunden eingesetzt. Im letzten Prozessschritt wurde der fertige Formkörper aus der Kavität entnommen. Dies ist beispielsweise beschrieben in DE10 2018 132 738 A1 und dem Fachmann an sich bekannt.

Tabelle 7 zeigt mechanisch-physikalische Eigenschaften und von UF-Harz oder PLA überzogenen und mit Lactosemonohydrat gebundene Formkörper mit unterschiedlichen Dicken nach der Vernetzung mittels Radiowellen.

**Tab. 7 Eigenschaften von Formkörpern aus expandierbarem Material**

| **Polymer atro Popcorn** | **Dichte [kg/m³]** | **Dicke [mm]** | **QZ [kPa]** | **Biegefestigkeit [kPa]** | **Dickenquellung nach 24 h [%]** |
|---|---|---|---|---|---|
| UF4% | 100 | 20 | 220 | 500 | 20 |
| Lactosemonohydrat in Mutterlauge 8 % | | 50 | 210 | 460 | 23 |
| PLA 4 % | | 20 | 190 | 480 | 23 |
| Lactosemonohydrat in Mutterlauge 8 % | 100 | 50 | 182 | 450 | 25 |

Es konnte somit gezeigt werden, dass auch unter Verwendung von expandierbarem Material als strukturgebendem und/oder dimensionsstabilisierendem Material sehr gute mechanische Eigenschaften erzeugt werden können. Dabei wurden nur sehr geringe Mengen an UF-Harz beziehungsweise an PLA verwendet, welche als Coating (Oberflächenkaschierung) für das strukturgebende und/oder dimensionsstabilisierende Material dienen und die hydrophobierende Eigenschaften verbessern und somit die Wasseraufnahme der Produkte deutlich reduziert.

## Patentansprüche

1. Mischung zur Ausbildung von Formkörpern, aufweisend ein organisches strukturgebendes und/oder dimensionsstabilisierendes Material und ein Bindemittel zum Aufnehmen des strukturgebenden und/oder dimensionsstabilisierenden Materials,
**dadurch gekennzeichnet, dass**
das Bindemittel im Wesentlichen frei von Aldehyd, insbesondere frei von Formaldehyd, ist und eine wasserhaltige Zusammensetzung wenigstens aufweisend Lactosemonohydrat umfasst.

2. Mischung nach Anspruch 1, **dadurch gekennzeichnet, dass** das Bindemittel Lactosemonohydrat, Asche und ein oder mehrere anorganische Salze aufweist.

3. Mischung nach Anspruch 1 oder 2, **dadurch gekennzeichnet, dass** das Bindemittel aus Molke erzeugt ist.

4. Mischung nach einem der Ansprüche 1 bis 3, **dadurch gekennzeichnet, dass** das Bindemittel einen Feststoffanteil in einem Bereich von ≥ 30 Gew.-% bis ≤ 70 Gew.-% aufweist.

5. Mischung nach einem der Ansprüche 1 bis 4, **dadurch gekennzeichnet, dass** das Bindemittel ferner ein Hydrophobierungsmittel aufweist.

6. Mischung nach einem der Ansprüche 1 bis 5, **dadurch gekennzeichnet, dass** die wasserhaltige Zusammensetzung des Bindemittels einen pH-Wert in einem Bereich von ≥ 4 bis ≤ 7 aufweist.

7. Mischung nach einem der Ansprüche 1 bis 6, **dadurch gekennzeichnet, dass** das organische strukturgebende und/oder dimensionsstabilisierende Material ein lignocellulosehaltiges Material, insbesondere einen Holzwerkstoff, umfasst.

8. Mischung nach einem der Ansprüche 1 bis 7, **dadurch gekennzeichnet, dass** das organische strukturgebende und/oder dimensionsstabilisierende Material ein expandierbares oder expandiertes Material umfasst.

9. Mischung nach einem der Ansprüche 1 bis 8, **dadurch gekennzeichnet, dass** der Binder in einer Menge vorliegt von ≥ 5 Gew.-% bis ≤ 20 Gew.-%, bezogen auf das strukturgebende und/oder dimensionsstabilisierende Material.

10. Verwendung einer Mischung, die im Wesentlichen frei von Aldehyd, insbesondere von Formaldehyd, ist und eine wasserhaltige Zusammensetzung wenigstens aufweisend Lactosemonohydrat umfasst, als Bindemittel zur Herstellung eines Formkörpers, wie etwa einer Holzwerkstoffplatte und/oder Verbundstoffplatte.

11. Verfahren zum Herstellen eines Formkörpers, aufweisend die Verfahrensschritte:
i) Bereitstellen einer Mischung nach einem der Ansprüche 1 bis 9; und
ii) Formen der Mischung unter erhöhter Temperatur und erhöhtem Druck oder unter erhöhter Temperatur und reduziertem Druck zu einem Formkörper.

12. Verfahren nach Anspruch 11, **dadurch gekennzeichnet, dass** Verfahrensschritt ii) bei einer Temperatur in einem Bereich von ≥ 50 °C bis ≤ 200 °C, insbesondere in einem Bereich von ≥ 90 °C bis ≤ 120 °C, erfolgt.

13. Verfahren nach Anspruch 11 oder 12, **dadurch gekennzeichnet, dass** Verfahrensschritt ii) erfolgt unter Verwendung eines Formpressens oder eines Formens in einem Formteilautomaten.

14. Verfahren nach einem der Ansprüche 11 bis 13, **dadurch gekennzeichnet, dass** Verfahrensschritt ii) erfolgt unter Verwendung eines Überdrucks in einem Bereich von ≥ 0,1 bar bis ≤ 10 bar oder einem Unterdruck in einem Bereich von ≥ 0,1 bar und ≤ 3 bar.

15. Formkörper, hergestellt nach einem Verfahren gemäß einem der Ansprüche 11 bis 14.
